(19) Europäisches Patentamt / European Patent Office / Office européen des brevets

(11) **EP 2 725 054 B1**

(12) **EUROPEAN PATENT SPECIFICATION**

(45) Date of publication and mention
of the grant of the patent:
**08.04.2015 Bulletin 2015/15**

(21) Application number: **13185914.2**

(22) Date of filing: **25.09.2013**

(51) Int Cl.:
*C08J 3/05* $^{(2006.01)}$  *C09J 189/00* $^{(2006.01)}$
*C08L 89/00* $^{(2006.01)}$

(54) **Method of preparing soy flour dispersions using an extruder**

Verfahren zur Herstellung von Sojamehldispersionen mit einem Extruder

Procédé de préparation de dispersions à base de farine de soja à l'aide d'une extrudeuse

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **26.10.2012 US 201261718999 P**

(43) Date of publication of application:
**30.04.2014 Bulletin 2014/18**

(73) Proprietors:
• **Rohm and Haas Company
Philadelphia,
Pennsylvania 19106-2399 (US)**
• **Dow Global Technologies LLC
Midland, MI 48674 (US)**

(72) Inventors:
• **Kelly, Michael D.
North Wales, PA Pennsylvania 19454 (US)**
• **Read, Michael David
Midland, MI Michigan 48642 (US)**

(74) Representative: **Buckley, Guy Julian
Patent Outsourcing Limited
1 King Street
Bakewell
Derbyshire DE45 1DZ (GB)**

(56) References cited:
EP-A1- 2 100 922     EP-A1- 2 354 205
DE-A1- 10 106 694    US-A1- 2007 017 504
US-A1- 2009 170 978   US-A1- 2012 171 740

**Description**

The present invention relates to one step methods for preparing ready to use formaldehyde free defatted soy flour binder compositions for fiberglass mat application comprising extruding wet soy flour in a twin screw extruder to both grind and to disperse the soy flour in an aqueous emulsion polymer modifier.

Known soy binders may be made by methods comprising describes high shear grinding and dispersing defatted soy flour in devices, such as Cowles dissolvers, high speed impellers or pumps, homogenizers, high speed agitators, mixers, or turbines. Such methods allow for higher solids formulations and lower viscosity for ease of handling, pouring, pumping, and mixing. However, the defatted soy flour must be preground to a desired particle size and then dispersed.

U.S. Patent no. 7,576,147, to Drzal, discloses extruding to react a protein or carbohydrate component of plasticized soy flour or soy flour plastic with a polymerizable vinyl monomer, such as styrene or maleic anhydride, and, optionally, with a biopolymer under shear and heat to form a soy polymer compound for use with fibers to make shaped articles. A half and half soy and polymer plus monomer composition is exemplified to show the advantages of the method. However, the soy flour has to be dried for a period of about 16 hours and then has to be plasticized before processing. In addition, it takes one pass through an extruder to get to soy flour plastic, and at least one pass to get to the soy polymer compound. The compound can then be combined with or applied to fiber to make shaped articles or fiber composite that can later be formed into shaped articles.

The drying and plasticization of soy flour are time consuming and add additional cost to the process

Accordingly, the present inventors have sought solve the problem of finding methods of making a heat-resistant curable aqueous composition which is free from formaldehyde, which is biodegradable and which can be made in a single continuous process.

STATEMENT OF THE INVENTION

1. In accordance with the present invention, continuous methods of making ready to use aqueous soy binders comprise extruding in a twin screw extruder a wet non-water soluble soy flour in grind phase mixing, preferably, in two or more kneading blocks or kneading block groups, or, more preferably, fully filled kneading blocks or kneading block groups, and downstream including a polycarboxy emulsion copolymer in a distributive mixing phase, preferably, in two or more forward mixing blocks, such that in the binders the amount of soy flour solids ranges from 51 to 95 wt.%, or, preferably, 60 to 95 wt.%, based on the total weight of binder solids, the amount of polycarboxy emulsion copolymer ranges from 5 to 40 wt.%, based on the total weight of binder solids, and, wherein the sieve particle size of the soy flour in the resulting product ranges from 5 to 44 $\mu$m, or, preferably, 43 $\mu$m or less, or, more preferably, 35 $\mu$m or less. Preferably, the soy flour has a moisture content of from 4 to 10 wt.%, or, for example, from 4.5 to 9 wt.%.

2. Preferably, in the methods 1 of the present invention, the twin-screw extruder is a co-rotating extruder.

3. In the methods 1 or 2 of the present invention, no heat is added to the extruder.

4. Preferably, in any one of the methods 1, 2 or 3 of the present invention, the polycarboxy emulsion copolymer comprises a copolymerized ethylenically unsaturated carboxylic acid, carboxylate or anhydride in the amount of from 5 to 40 wt.%, based on the total weight of monomers used to make the copolymer.

5. Preferably, in any one of the methods 1 to 4 of the present invention further comprise adding water to the extruder downstream of the soy flour in the grind phase and/or downstream of the polycarboxy emulsion copolymer in the distributive mixing phase to reach a total binder solids content of from 5 to 60 wt.%, or, preferably, from 20 to 60 wt.%, or, more preferably, 25 to 35 wt.% in the distributive mixing phase.

6. Preferably, in any one of the methods 1 to 5 of the present invention, distributive mixing phase further comprises extruding one or more reducing sugar, for example, dextrose, xylose or a corn syrup, in the total amount of 1 to 40 wt.%, based on the weight of total binder solids.

7. Preferably, in any one of the methods 1 to 6 of the present invention, the distributive mixing phase further comprises extruding one or more thermally generated acid, such as ammonium salts of mineral acids, like ammonium sulfate, in the total amount of from 0.25 to 10 wt.%, based on the total weight of binder solids.

8. Preferably, in any one of the methods 1 to 7 of the present invention, the distributive mixing phase further comprises extruding a protease enzyme in the amount of from 0.1 to 2.5 wt.%, or, preferably, from 0.1 to 1.5 wt, based on the total weight of soy flour solids, an amylase enzyme in the amount of from 0.1 to 2.5 wt.%, or, preferably, from 0.1 to 1.5 wt.%, based on the total weight of soy flour solids, a combination of the protease and the amylase enzyme. More preferably, the distributive mixing phase contains both thermally generated acid and one or more of the enzymes, or a reducing sugar and one or more of the enzymes, or a thermally generated acid , a reducing sugar and one or more of the enzymes.

More preferably, the total amount of all enzymes extruded in to make the binder composition ranges from 0.2 to 5.0 wt.%, based on the total weight of soy flour solids,

All ranges recited are inclusive and combinable. For example, a sieve particle size of 1 to 50 $\mu$m, or, preferably, 43 $\mu$m or less, or, more preferably, 35 $\mu$m or less, will include ranges of from 1 to 50 $\mu$m, from 1 to 43 $\mu$m, from 1 to 35 $\mu$m and from 35 to 43 $\mu$m.

Unless otherwise indicated, all pressure units are standard pressure and all temperature units refer to room temperature.

Unless otherwise indicated, any term containing parentheses refers, alternatively, to the whole term as if no parentheses were present and the term without that contained in the parentheses, and combinations of each alternative. Thus, the term "(co)polymer" refers to a homopolymer or copolymer. Further, "(meth)acrylic" refers to any of acrylic, methacrylic, and mixtures thereof.

As used herein, the phrase "aqueous" includes water and mixtures comprising water and less than 50 wt.% of one or more water-miscible solvent, based on the total weight of the water and solvent.

As used herein, "wt%", "wt.%" or "wt. percent" means weight percent.

As used herein, the phrase "based on the total weight of binder solids" refers to weight amounts of any given ingredient in comparison to the total weight amount of all the non-water ingredients in the binder.

As used herein, unless otherwise indicated, the word "copolymer" includes, independently, copolymers, terpolymers, block copolymers, segmented copolymers, graft copolymers, and any mixture or combination thereof.

As used herein, the phrase "emulsion (co)polymer" refers to a (co)polymer that has been prepared by emulsion polymerization.

As used herein, the phrase "substantially formaldehyde-free composition" refers to compositions that have less than 0.05 wt.%, based on the total weight of binder solids, of added formaldehyde, and which do not liberate substantial formaldehyde as a result of drying and/or curing. Compositions which meet these requirements and which contain less than 500 ppm or, preferably, 100 ppm or less, or, more preferably, 1 ppm or less formaldehyde are "formaldehyde free".

As used herein, unless otherwise indicated, the phrase "molecular weight" or the term "average molecular weight" when referring to a polymer refers to the weight average molecular weight ($M_w$) of a polymer as measured by gel permeation chromatography (GPC). Gel permeation chromatography, otherwise known as size exclusion chromatography, actually separates the members of a distribution of polymer chains according to their hydrodynamic size in solution rather than their molar mass. The system is then calibrated with standards of known molecular weight and composition to correlate elution time with molecular weight. The techniques of GPC are discussed in detail in Modern Size Exclusion Chromatography, W. W. Yau, J. J Kirkland, D. D. Bly; Wiley-Interscience, 1979, and in A Guide to Materials Characterization and Chemical Analysis, J. P. Sibilia; VCH, 1988, p. 81-84.

As used herein, the term "reducing sugar" herein is any sugar that either has an aldehyde group or is capable of forming one in solution through isomerism, e.g. after placing it in an alkaline solution.

As used herein, the term "sieve particle size" of a solid material means the particle size in microns ($\mu$m) of the smallest stainless steel sieve through which 98 wt.% or more, or, preferably, 100 wt.% of the given solid material will pass; it is also the maximum particle size of a given solid. Note that any solid will have a distribution of actual particle sizes. For example, if 98 wt.% or more of a defatted soy flour passes through a 44 $\mu$m mesh (325 mesh) sieve but not a 43 $\mu$m mesh sieve, that flour is referred to as having a 44 $\mu$m sieve particle size. So, 98 wt.% or more of the actual solid material having a given sieve particle size will comprise particles which are small enough to pass through a stainless steel sieve of the indicated sieve particle size; and the largest of these particles will be equal to or smaller than the holes in the sieve.

As used herein, the term "water soluble" means soluble in water under ambient conditions of room temperature and ambient pressure and a pH of 7.4 to form a homogeneous solution of the analyte material (e.g. soy flour) in water.

The extrusion methods of the present invention enable one to use crude, non water soluble soy flour or defatted soy flour as purchased from a soy flour supplier to make a binder suitable for applications, for example, to non-wovens in a single continuous process. In extruding in accordance with the present invention, one both grinds and disperses the soy flour in an aqueous (co)polymer emulsion to prepare a fully formulated binder composition at the particle size required to enable use as binders in, for example, mats or non-wovens, such as a mineral fiber or fiberglass shingle mat without unduly increasing the viscosity of such binders so that they cannot effectively be distributed throughout the mat before curing. Soy flours wherein less than 98 wt.% of the flour passes through a 44 $\mu$m mesh sieve fail to work on mats or non-wovens because the binders made from them clog the interfiber spaces in the non-woven or mat in use; thus, those binders cannot be dispersed effectively throughout the non-woven or mat. Accordingly, the methods of the present invention eliminate costly grinding used in prior methods to reduce the soy flour particle sieve particle size the needed amount. Further, the inventive methods rely solely on the heat of friction generated in the extruder to process the binders in the distributive mixing phase. So, the inventive methods eliminate the viscosity increasing impact of adding heat in process. As a result, the Applicants have discovered a low energy process for making soy flour binders useful for non-wovens and mats that actually enables one to increase the solids content of a soy flour binder without increasing its viscosity.

Extruding in the methods of the present invention comprises extruding the soy flour through a grind phase comprising at least two dispersive mixing blocks and dispersing soy flour and polycarboxy emulsion copolymer in a distributive mixing phase comprising at least 2 distributive (forwarding mixing blocks). Suitable dispersive mixing blocks are fully filled kneading blocks, blister elements and gear mixers. Suitable distributive mixing blocks are forwarding kneading blocks. Each block in the extruder comprises 2 to 6 diameter lengths, or, preferably, 3 to 5 diameter lengths.

Suitable extruders comprise 2 to 3, preferably 2 to 3 input segments where the binder materials can be added. One such segment lies upstream of the segments where grind mixing will occur for addition of soy flour and water and the other lies upstream of the distributive mixing blocks for addition of water and polycarboxy emulsion copolymer.

Suitable twin screw extruders for grind phase mixing should be equipped with two or more, preferably, three or more, and up to 6, kneading block groups or gear mixing blocks, or, more preferably, 3 or more, and up to 6 fully filled kneading block groups or fully filled gear mixing blocks. Suitable mixing blocks for dispersive mixing or grinding are, for example, neutral kneading blocks, fully filled kneading blocks, blister rings and reverse kneading blocks. A fully filled kneading element can have a geometry or a restriction that results in the filling of the element volume during extrusion.

Preferably, the twin-screw extruder is a co-rotating extruder.

Suitable twin screw extruders for distributive phase mixing should be equipped with two or more, preferably, three or more, and up to 6, mixing blocks. Suitable mixing blocks for distributive phase mixing are narrow kneading blocks, neutral kneading blocks, gear mixing elements and fully filled kneading elements. A fully filled kneading element can have a geometry or a restriction that results in the filling of the element volume during extrusion.

As used herein, the term "section" of an extruder refers to any physical unit that is attached lengthwise to the extruder barrel or that forms a piece of the extruder barrel. A section can have two or more mixing blocks, which may independently vary; or a mixing block can comprise one or more than one sections of the extruder.

Suitable extruders have a length to diameter ratio of from 10 to 100, preferably, 20 or more, or, preferably, 80 or less, or more preferably, from 24 to 60.

In an example of a suitable twin-screw extruder, any number of different configurations of known extruder elements would provide sufficient grind phase mixing followed by distributive phase mixing while still allowing for the input of soy flour and water early in the grind mixing phase and for the input of water and polycarboxy emulsion copolymer early in the distributive mixing phase. Grind mixing elements in the extruder may comprise kneading blocks (forward, neutral, or reverse), blister rings, and gear elements. Distributive mixing elements in the extruder may comprise a zone of forward elements, or a combination of forward and reverse elements.

Preferably, to maintain proper torque, the desired solids level during extrusion in the grind mixing phase should be maintained at a solids content in the 40 to 65 wt.% range, preferably, from 50 to 60 wt.%. If the solids content is too low, only ineffective grinding will occur in the grind phase and particles will be too large; and, if the solids content is too high, there will be too much heat in the system, which can lead to increased binder viscosity or limit the mass flow rate to very low rates without overloading the extruder drive motor.

Preferably, the solids content during distributive mixing can be from 5 to 60 wt.%, or, more preferably, 20 wt.% or more. The solids contents in distributive mixing can thus be lowered after the grind mixing phase; thus, water may be added before or during distributive mixing to adjust the solids content to the desired level.

In accordance with the present invention, the soy flour comprises 51 to 95 wt.%, based on the total weight of solids in the binder, or, preferably, 60 to 95 wt.%, based on the total weight of solids, or, more preferably, from 65 to 95 wt.%, based on the total weight of solids, or, most preferably, from 70 to 80 wt.%.

Suitable soy flours for use in the present invention are insoluble in water. For example, defatted soy flour as supplied is insoluble in water. Suitable defatted soy flour starting materials may have PDI values of, for example, 20, 70, and 90. Suitable defatted soy flour materials may be commercially available or they may comprise whole soy flour (including the hulls, oil, protein, carbohydrate, minerals, etc.), or meal (extracted or partially extracted). As used herein, "flour" includes within its scope whole soy flour, defatted soy flour, or soy protein concentrate (partially processed flour containing approximately 60-70% protein, less than about 0.5 wt.% oil and approximately 10-20 wt.% carbohydrate). As used herein, the term "defatted soy flour" refers to soy material containing >20 wt.% carbohydrate, while still referring to a flour where the oil has been removed ("defatted") to levels below 1.5 wt.%.

Preferably, the soy flour of the present invention has less than 99 wt.% of soy protein and excludes soy protein.

The polycarboxy emulsion copolymer used in the methods of the present invention may comprise, as copolymerized units, ethylenically unsaturated monomers including (meth)acrylic ester monomers such as methyl acrylate, ethyl acrylate, butyl acrylate, 2- ethylhexyl acrylate, decyl acrylate, lauryl acrylate, methyl methacrylate, butyl methacrylate, isodecyl methacrylate, lauryl methacrylate, hydroxyalkyl (meth)acrylate monomers such as 2-hydroxyethyl acrylate, 2-hydroxyethyl methacrylate, 2-hydroxypropyl (meth)acrylate, 2-hydroxybutyl (meth)acrylate, 1-methyl-2-hydroxyethyl (meth)acrylate, and N,N-dimethylaminoethyl (meth)acrylate; as well as the related amides and nitriles, such as (meth)acrylamide or substituted (meth)acrylamides, and acrylonitrile or methacrylonitrile. Other ethylenically-unsaturated nonionic monomers which may be incorporated into the polymer include vinylaromatic compounds, such as styrene or alkyl substituted styrenes; butadiene; vinyl acetate, vinyl butyrate and other vinyl esters; vinyl monomers such as vinyl alcohol; hydroxyalkyl (meth)acrylates, such as hydroxyethyl-(meth)acrylate; and allyl monomers, such as allyl alkyl ethers or allyl alcohols Examples of suitable polycarboxy emulsion (co)polymers may include styrene-acrylic latexes, all-acrylic latexes, or styrene-butadiene or styreneacrylonitrile-butadiene latexes.

The polycarboxy emulsion copolymer of the present invention comprises from 5 to 40 wt.%, based on the total weight of binder solids, or, preferably, from 10 to 40 wt.%, or, more preferably, from 10 to 25 wt.%, or, most preferably, from 15 to 25 wt.%.

The emulsion copolymer used in the binder of the present invention includes, as copolymerized units, ethylenically unsaturated carboxylic acid, anhydride or salt monomers, such as (meth)acrylic acid, maleic acid or itaconic acid, preferably, acrylic acid. The amount of copolymerized ethylenically unsaturated carboxylic acid, anhydride or salt may range from 5 to 40 wt.%, based on the total weight of monomers used to make the polycarboxy emulsion (co)polymer, or, 5 to 30 wt.%, or, preferably, from 10 to 30 wt.%, or, more preferably, from 10 to 20 wt.%, or , most preferably, from 12 to 20 wt.%.

Preferably, the polycarboxy emulsion copolymer comprises in copolymerized form one or more multi-ethylenically unsaturated monomers such as, for example, allyl methacrylate (ALMA), allyl acrylate, diallyl phthalate, 1,4-butylene glycol dimethacrylate, 1,2-ethylene glycol dimethacrylate, 1,6-hexanediol diacrylate, butadiene, trimethylolpropane triacrylate (TMPTA) and divinyl benzene. Of these, ALMA, divinylbenzene (DVB), diallyl phthalate, 1,4-butylene glycol dimethacrylate, and 1,6-hexanediol diacrylate are preferred. ALMA is the most preferred. Suitable amounts of the copolymerized multi-ethylenically unsaturated monomer may range up to 10 wt.%, based on the total weight of monomers used to make the polycarboxy emulsion (co)polymer, or, preferably, from 0.1 to 10 wt.%, or, more preferably, from 0.1 to 5 wt.%, or, most preferably, from 0.2 to 3 wt.%.

The polycarboxy emulsion copolymer may preferably be self-crosslinking groups and thereby contain monomers in copolymerized form that are capable of forming chemical bonds during and after drying of the aqueous polymer composition. Suitable self-crosslinking monomers may include, for example, monomers having alkoxymethyl amide groups, such as, N-methylolacrylamide, N-methylolmethacrylamide, n-butoxymethyl acrylamide, n-butoxymethyl methacrylamide. Such monomers may be employed at levels of up to 10 wt.%, based on the total weight of monomers used to make the polycarboxy emulsion (co)polymer, or, preferably, from 0.1 wt.% or more, or, preferably, 5 wt.% or less.

Preferably, the polycarboxy emulsion copolymer of the present invention has a measured glass transition temperature or (measured Tg) of between -20 to 35ºC, or, preferably, from -10 to 20ºC, as measured by differential scanning calorimetry per ASTM 3418/82 (1982) at a heating rate of 20 ºC/min, and taking the midpoint of the temperature plateau on the scan, with cell calibration performed using an indium reference for temperature and enthalpy.

The polycarboxy emulsion copolymer may be made by conventional aqueous emulsion polymerization in the presence of thermal or redox initiators and, to control molecular weight, one or more chain transfer agents such as mercaptans, polymercaptans, and halogen compounds, for example, in the amount of up to 10 wt.%, based on the total weight of monomers used to make the polycarboxy emulsion (co)polymer, or, preferably, 0.5 wt.% or more or, preferably, up to 7 wt.%.

Suitable polycarboxy emulsion (co)polymers may have weight average molecular weights (measured by gel permeation chromatography (GPC) as against a polyacylic acid standard) of from 5,000 to 2,000,000, or, preferably, from 20,000 and 1,000,000.

For applications requiring high performance at elevated temperatures such as heat resistant non-wovens, preferably, the polycarboxy emulsion copolymer of the present invention has a weight average molecular weight of from 100,000 to 1,000,000.

For some room temperature applications, such as removable adhesives, the weight average molecular weight of the polycarboxy emulsion copolymer of the present invention preferably ranges from 30,000 to 600,000.

Preferably, the methods of extruding to form aqueous binders comprises extruding a thermally generated acid in the distributive mixing phase Ammonium salts of mineral acids are suitable; for example, ammonium salts of sulfuric acid, or nitric acid, or hydrochloric acid, or phosphoric acid, or phosphorous acid among others. Suitable acid salts may be mono-basic, or dibasic, or polybasic depending on the acid. For example, phosphoric acid ($H_3PO_4$) can have three acidic protons. Suitable examples include ammonium sulfate, ammonium persulfate, ammonium chloride, ammonium nitrate, ammonium phosphate, ammonium hydrogen phosphate, ammonium para-toluene sulfonate, and ammonium naphthalene disulfonate. The term "ammonium" includes "alkyl ammonium." The ammonium salt may be present at a level of from 1 to 10 wt.% based on solids as a percentage of the total solids in the binder. Preferably, the ammonium salt is present at a level of from 1 %, or from 2%, up to a level of 10%, or up to 8%; and, most preferably, is at a level of from 2% up to 5% based on solids as a percentage of the total solids in the binder.

The methods of the present invention may comprise extruding in the distributive mixing phase at least one reducing sugar. Reducing sugars include all monsaccharides, whether aldose (containing an aldehyde) or ketose (containing a ketone). Accordingly, the reducing sugars suitable for use in the present invention may be monosaccharides in their aldose or ketose form, including a triose, a tetrose, a pentose, a hexose, or a heptose. Reducing sugars include glucose, fructose, glyceraldehydes, lactose, arabinose and maltose. Other natural or synthetic stereoisomers or optical isomers of reducing sugars may also be useful as the reducing sugar component of the aqueous binder composition; for example, dextrose, which is one of the optical isomers of glucose. In addition, a reducing sugar is any sugar that, in alkaline solution, forms an aldehyde. A sugar may be a reducing sugar when its anomeric carbon (the carbon linked to two oxygen atoms) is in the free form. In addition, reducing sugars may occur in a chain as well as a ring structure and it is possible to have an equilibrium between these two forms. For example, some keto sugars are also reducing sugars because some can be converted to an aldehyde via a series of tautomeric shifts to migrate the carbonyl group to the end of the carbon chain.

Most disaccharides are also reducing sugars. The reducing sugars of the aqueous binder of the present invention optionally may be substituted, for example with hydroxy, halo, alkyl, alkoxy, or other substituent groups.

Preferably, the reducing sugar is dextrose, or a high dextrose content syrup (greater than 30% dextrose). In such syrups, the higher the dextrose content, the better; syrups with 97%, or greater, dextrose content are commercially available, for example ADM 97/71 corn syrup, from Archer Daniels Midland Company (Decatur, Illinois, USA).

The reducing sugar may comprise up to 30 wt.%, based on the total weight of binder solids, or, preferably, 3 wt.% or more, or, more preferably, 5 wt.% or more, or, preferably, up to 25 wt.%, or, more preferably, up to 15 wt.%.

The methods of the present invention may further comprise extruding in the distributive mixing phase compositions that further comprise one or more protease or amylase enzymes. Such enzymes take advantage of the heat of extrusion to further decouple higher solids content from higher viscosity.

The aqueous binder of the present invention may further include a water soluble addition (co)polymer, containing at least two carboxylic acid groups, anhydride groups, or salts thereof. Such addition (co)polymers are the polymerization product of 70 wt.% or more, based on the total weight of monomers used to make the water soluble (co)polymer, of ethylenically unsaturated carboxylic acids. Ethylenically unsaturated comonomers may include acrylic ester monomers, including methyl (meth)acrylate, ethyl (meth)acrylate, butyl (meth)acrylate, 2-ethylhexyl acrylate, etc. The water soluble (co)polymer may have a weight average molecular weight from about 1,000 to 150,000. The water soluble (co)polymer may be used in amounts of up to 30 wt.%, based on the total weight of binder solids, or, preferably, 0.1 wt.% or more, or, preferably, 10 wt.% or less.

In the methods of the present invention, the distributive mixing phase of extruding aqueous compositions may further comprise extruding compositions comprising at least one low molecular weight polybasic carboxylic acid, anhydride or salt thereof having a molecular weight of 1000 or less, preferably 500 or less, and most preferably 200 or less. "Polybasic" means having at least two reactive acid or anhydride functional groups. Examples of suitable low molecular weight polybasic carboxylic acids and anhydrides include, for example, maleic acid, maleic anhydride, fumaric acid, succinic acid, succinic anhydride, sebacic acid, azelaic acid, adipic acid, citric acid, glutaric acid, tartaric acid, itaconic acid, trimellitic acid, hemimellitic acid, trimesic acid, tricarballytic acid, 1,2,3,4-butanetetracarboxylic acid, pyromellitic acid, oligomers of carboxylic acid, and the like. When used, preferably, the low molecular weight polybasic carboxylic acid, anhydride or salt thereof is pre-cooked with the soy or lignosulfonate, prior to mixing with the emulsion copolymer. Most preferably, citric acid is used as the polybasic acid.

The methods of the present invention may further comprise extruding in the distributive mixing phase compositions that further comprise one or more polyol crosslinking agent. The polyol may be added at a level of 0.3 to 100 hydroxyl group equivalents per carboxyl(ate) or anhydride group equivalent of the polycarboxy emulsion (co)polymer. For the purposes of the present invention, an anhydride group is treated as two carboxyl groups. Any polyol contains two or more hydroxyl groups. Polyols containing both hydroxyl and amine groups can also be used. Suitable crosslinkers include glycerol, glycerol derivatives, diethanolamine, triethanolamine, pentaerythritol, hydroxy alkyl urea and, polyvinyl alcohol.

Buffers and weak bases, such as aqua ammonia an organic acid salt, e.g. ammonium citrate, or a phosphate may be added to an enzyme containing binder composition or to the enzyme before or in process to optimize enzyme activity.

The extrusion methods of the present invention may further comprise including in the distributive mixing phase any conventional additives such as, for example, emulsifiers; pigments; fillers or extenders, such as lignosulfonates; anti-migration aids; curing agents; coalescents; surfactants, particularly nonionic surfactants; spreading agents; mineral oil dust suppressing agents; preservatives or biocides, such as isothiazolones; plasticizers; anti-foaming agents such as dimethicones, silicone oils and ethoxylated nonionics; corrosion inhibitors, particularly corrosion inhibitors effective at pH<4 such as thioureas, oxalates, and chromates; colorants; antistatic agents; lubricants; waxes; anti-oxidants; coupling agents such as silanes, particularly Silquest™ A-187 (manufactured by GE Silicones--OSi Specialties, Wilton, CT); and waterproofing agents such as silicones and emulsion polymers, particularly hydrophobic emulsion polymers containing, as copolymerized units, greater than 30% by weight, based on the weight of the emulsion polymer solids, ethylenically-unsaturated acrylic monomer containing a $C_5$ or greater alkyl group.

The resulting aqueous binder compositions are substantially formaldehyde-free to minimize the formaldehyde content; the aqueous compositions comprise monomers, catalysts, solvents or carriers, and additives which are themselves free from formaldehyde, do not generate formaldehyde during the polymerization process, and do not generate or emit formaldehyde during the treatment of heat-resistant non-wovens.

Suitable uses for the aqueous binders made by the methods of the present invention include those for making shingle mats to keep roofing granules on; as urea formaldehyde or phenol formaldehyde replacements in ceiling tile; floor tile; acoustic tile; spunbond polyester mats; and in built up roofing in the mat/asphalt layers.

The aqueous binder compositions of the present invention may be applied to substrates and then dried. The binder can be applied to substrates by any suitable means including, for example, air or airless spraying, padding, saturating, roll coating, curtain coating, beater deposition, coagulation, or dip and squeeze application. To remove excess binder, the resultant saturated wet web may be run over one or more vacuum boxes to remove enough binder to achieve the desired binder content in the mat. Preferably, the binder is applied to the web on a moving screen. Suitable binder levels can range from 10 to 40 wt.% of the final treated substrate, or, preferably from 15 to 30 wt.%, or, more preferably, from 20 to 28 wt.%.

The aqueous binder composition is curable or dried by the application of heat. In drying, the duration, and temperature of heating, will affect the rate of drying and the ease of processing or handling the treated substrate, as well as the property development of the resulting composite. Suitable heat treatment at 100°C or more, and up to 400°C, may be maintained for from 3 seconds to 15 minutes. Preferably, heat treatment temperatures range 150°C or higher; such preferred heat treatment temperatures may range up to 225°C, or, more preferably, up to 200°C or, when using one or more phosphorous-containing accelerator, up to 150°C.

Drying can include curing, or drying and curing can be done in two or more distinct steps, if desired. For example, the curable composition can be first heated at temperatures and for times sufficient to substantially dry, but not to substantially cure the composition, followed by heating for a second time, at higher temperatures and/or for longer periods of time, to effect curing. Such procedures, referred to as "B-staging," can be used to provide binder-treated non-wovens, for example, in roll form, which can be cured later, with or without forming or molding into a particular configuration, concurrent with the curing process.

The aqueous binders can be applied to various substrates to make non-wovens, mats and composites. "Non-woven web(s)" refers to any article or sheet-like form made from natural and/or synthetic fibers, including porous films prepared by the action of chemical or mechanical processing (e.g., apertured films), paper and paper products. Manufacturing processes for making non-woven webs are well known in the art. These include, for example, wet-laid, air-laid (dry laid), spunbond, spunlace, meltblown and needle punch. Composites may comprise substrate materials chosen from fibers, slivers, chips, particles, and combinations thereof. Suitable fibers, slivers, chips, particles or particulate matter and combinations thereof, may be chosen from any comprised of metal, metal oxides, plastic, minerals, glass, paper, cardboard, and combinations thereof. In one embodiment, the fibers, slivers, chips, particles or particulate matter and combinations thereof are heat resistant. Preferably, the substrate material is a mat chosen from polyester mat, glass reinforcing mat, or microglass based substrate material. Preferably, the fibers are glass fibers or polyester fibers.

Suitable fibers may be chosen from natural fibers (e.g., sisal, jute, hemp, flax, cotton, coconut fibers, banana fibers); animal fibers (e.g., wool, hair); plastic fibers (e.g., polypropylene fibers, polyethylene fibers, polyvinyl chloride fibers, polyester fibers, such as rayon, polyamide fibers, polyacrylonitrile fibers, polylactic acid fibers, polycaprolactone fibers, and bi-component fiber comprising two or more fiber-forming polymers such as polypropylene and polyethylene terephthalate); glass fibers; glass wool; mineral fibers; mineral wool; synthetic inorganic fibers (e.g., aramid fibers, carbon fibers); and combinations thereof.

Preferably, suitable fibers are chosen from heat resistant fibers, such as mineral fibers, aramid fibers, ceramic fibers, metal fibers, carbon fibers, polyimide fibers, polyester fibers, glass fibers, glass wool, mineral wool and combinations thereof. Heat-resistant non-wovens may also contain fibers which are not in themselves heat-resistant such as, for example, nylon fibers, and superabsorbent fibers, in so far as or in amounts such that they do not materially adversely affect the performance of the substrate.

Some non-woven fabrics are used at temperatures substantially higher than ambient temperature such as, for example, glass fiber-containing non-woven fabrics which are impregnated with a hot asphaltic composition pursuant to making roofing shingles or roll roofing material. When a non-woven fabric is contacted with a hot asphaltic composition at temperatures of from 150°C to 250°C, the non-woven fabric can sag, shrink, or otherwise become distorted. Therefore, non-woven fabrics which incorporate a curable composition should substantially retain the properties contributed by the cured aqueous binder composition such as, for example, tensile strength. In addition, the cured composition should not substantially detract from essential non-woven fabric characteristics, as would be the case, for example, if the cured composition were too rigid or brittle or became sticky under processing conditions. The composites described herein find utility in many varied applications, particularly in glass mats for roofing shingles and glass mats for flooring.

Examples: The following examples illustrate the present invention.

The following materials were used in the examples below.

Soy flour A: PROLIA™ defatted soy flour/FLR-200/901ND (Cargill Corporation, Minneapolis, MN) dry powder containing about 8 wt.% moisture and having a sieve particle size of greater than 74 $\mu$m such that 92 to 95 wt.% of the particles are less than 74 $\mu$m (would pass through a 200 mesh or 74 $\mu$m sieve).

Sodium metabisulfite added as a protein denaturant, viscosity modifier, and preservative (Fischer Scientific, Pittsburgh, PA).

Latex Premix A: 0 °C Tg, 15% acrylic acid containing styrene-acrylic copolymer emulsion formulated with ammonium sulfate, sodium metabisulfite, and linoleic acid defoamer;46% solids in water.

Latex Premix B: 0 °C Tg, 15% acrylic acid containing styrene-acrylic copolymer emulsion formulated with sodium metabisulfite, and linoleic acid defoamer; 43.5% solids in water.

Enzyme A: ALCALASE™ 2.5L Type DX protease (Novozymes North America, New York, NY) supplied as an aqueous solution of activity 2.5 AU/gram. One AU (Anson unit) is defined as the amount of enzyme which, under specified conditions, digests urea-denatured hemoglobin at an initial rate such that there is liberated an amount of trichloroacetic acid (TCA) soluble product per minute which gives the same color with Folin-Ciocalteu Phenol reagent as one milliequivalent of tyrosine at 25 °C and pH 7.50.

Enzyme B: BAN 480L $\alpha$-amylase (Novozymes North America, New York, NY) supplied as an aqueous solution of activity 400 KNU/g. One KNU (kilo novo unit) is defined as the amount of enzyme that releases 6 $\mu$mol p-nitrophenol per minute from 1.86 mM ethylidene-G7-nitrophenyl-maltoheptaoside at pH 7.0 and 37° C.

Extruder: A laboratory scale, 30-mm diameter, 38-diameter in length (L/D =38), Werner & Pfleiderer co-rotating, self wiping twin screw extruder with a barrel formed from 12 barrel sections and 9 temperature control zones. The extruder screw design provides kneading and shearing of the contents early in a grind phase and distributive mixing later in a distributive phase. Barrels 3 to 7 of the extruder were designed with several sections, comprising along their length two closely intermeshed neutral kneading blocks provide grinding (dispersive mixing) and then two narrow kneading blocks then distributive mixing. The extruder has multiple injection points along the length of the machine for liquid injection and is equipped with a 11.2-kW motor with a maximum screw speed of 500 rpm.

Extrusion Procedure: Soy flour was fed into the feed port (barrel section 1) of the extruder using a K-Tron Corporation model KT-20 twin-screw loss-in-weight feeder (K-Tron International, Inc., Pitman, NJ). To minimize the dusting of the powder dropping from the feeder, the feeder was located immediately above the feed port (8-cm above feed port). The extruded material was conveyed to barrel 3 where water and, optionally, polycarboxy emulsion copolymer were added to the soy flour to bring the solids content down to the indicated level (before grinding phase of the screw design). Examples 5, 6, and 7 were prepared with the polycarboxy emulsion copolymer indicated in Table 1 added in the upstream feed position in barrel 3 of the extruder. At barrel 8, additional water and, optionally, polycarboxy emulsion copolymer were added to bring the final solids content to the indicated concentration (after the grinding phase but before the distributive mixing phase). Examples 2, 3, and 4, below, were prepared with the polycarboxy emulsion copolymer indicated in Table 1 added in the downstream feed position in barrel 8 of the extruder. The mixing elements at the end of the extruder provided additional distributive mixing to the contents with the intent of creating a stable mixture at the end of the process. Once the extrudate was collected, it was allowed to cool to 20ºC.

In Examples 1 to 9, 1 part (w/w) sodium metabisulfite powder was added to 100 parts (w/w) soy flour feed material. A preblend of the two powders was prepared by mixing the two powders in a tumble blender for 5 minutes prior to loading into the loss in weight feeder.

In all Examples, the water feed was supplied by two Teledyne ISCO positive displacement syringe pump units (model D-500 and D-1000 (Teledyne Isco Inc., Lincoln, NE). The dual-pump configuration with controller enables continuous operation of the pumps from a larger supply container of distilled water. The water was injected into the extruder with standard injection nozzles for a 30-mm twin-screw extruder. A pressure gauge was located at each injection point to measure the injection pressure.

In all Examples, the polycarboxy emulsion copolymer was injected by one ISCO dual-pump positive displacement pump unit (model D-500). The dual-pump configuration with controller enables continuous operation of the pumps from a larger supply container of polycarboxy emulsion copolymer formulation. The polycarboxy emulsion copolymer was injected into the extruder with standard injection nozzles for a 30-mm twin-screw extruder.

In using the polycarboxy emulsion (co)polymer, two liquid pumps were connected by a tee connection in order to mix the water dilution feed and the polycarboxy emulsion copolymer feed just upstream of the liquid injection nozzle into the extruder. The pump flow rates of the water and polycarboxy emulsion copolymer were adjusted using a mass balance to obtain the desired 60 wt.% concentration of solids and emulsion polymer solids in the grinding phase of the extruder and 25 weight percent solids concentration in the distributive mixing phase of the extruder.

In using the enzymes, any enzyme is added to the initial water injection feed at barrel 3 as a means of incorporating the enzyme into the formulation. The enzyme is weighed on a digital weigh scale in a laboratory hood and then added to 1-liter of water to obtain the desired composition. The mixture is agitated by a magnetic stirrer bar for 10 minutes prior to adding the mixture to the feed port of the ISCO liquid pump.

Examples 1 to 9: Making Aqueous Binders Of Defatted Soy Flour

Soy flour A was fed to the extruder using the Extrusion Procedure. Details of the extruder operating conditions and feed rates are given in Table 1, below. Comparative examples 1, 8 and 9 (CE1, CE8 and CE9) were prepared without the addition of the polycarboxy emulsion (co)polymer. None of the Examples 1-9 contain any enzyme.

Samples were prepared for testing by taking the extruder extrudate containing all of the ingredients and diluting to 25 wt.% solids.

Total extrusion time was 1 to 5 minutes, with a weight ratio of soy flour solids to polycarboxy emulsion copolymer solids in the Examples of about 2.9 to 1.

Glass Mat Preparation: To prepare the fiberglass handsheets in Examples 1-9, 100 gallons of whitewater solution was prepared by mixing an anionic polyacrylamide water-in-oil emulsion, SUPERFLOC™ A-1883 RS (Cytec Industries Incorporated, West Paterson, NJ), and an ethoxylated fatty amine cationic dispersing agent, RHODAMEEN™ VP-532 SPB (Rhodia Chemical Company, Cranbury, NJ), in water until the mixture is homogeneous. A18.9 liter (5-gallon) amount of the whitewater was pumped to a separate mixing vessel equipped with a mechanical stirrer. While stirring, 7.6 grams of glass fiber chop, Johns Manville 137 Standard, 3.2 cm (1¼ inch) length, was added to the vessel. Once the glass fiber was completely dispersed in the whitewater, the mixture was transferred to a Williams handsheet mold (Williams Apparatus Company, Watertown, NY) to form the handsheet. The wet handsheets were transferred to a stainless steel screen and de-watered by vacuuming the excess whitewater through the handsheet from beneath the screen. The indicated aqueous binder was then applied through a sprinkler head by making multiple passes back and forth over the de-watered handsheet until it is fully saturated. Any excess binder was then vacuumed through the handsheet from beneath the stainless steel screen. The wet handsheets were dried/cured in a forced air oven for 150 seconds at 200°C. The binder amount on the samples is approximately 21% LOI (loss on ignition).

Table 1: Extruder Conditions for Examples 1 to 9

| Example | CE 1 | 2 | 3 | 4 | 5 | 6 | 7 | CE8 | CE9 |
|---|---|---|---|---|---|---|---|---|---|
| Pump @ B3 rate (ml/min) | 26.90 | 26.90 | 26.90 | 26.90 | 28.20 | 18.90 | 10.96 | 42.34 | 15.97 |
| Pump @ B8 rate (ml/min) | 107.66 | 136.47 | 95.19 | 65.71 | 135.09 | 144.47 | 152.41 | 39.50 | 65.87 |
| Latex Premix A rate (ml/min) | 0.00 | 34.30 | 34.30 | 34.30 | 34.30 | 34.30 | 34.30 | 0 | 0 |
| Soy Flour feed (kg/h) | 3.00 | 3.00 | 3.00 | 3.00 | 3.00 | 3.00 | 3.00 | 3.00 | 3.00 |
| Total rate (kg/h) | 11.07 | 14.86 | 12.38 | 10.61 | 14.86 | 14.86 | 14.86 | 7.91 | 7.91 |
| Extruder RPM | 450 | 450 | 450 | 450 | 450 | 450 | 450 | 450 | 450 |
| Zone #1 (ºC) | 20.7 | 20.8 | 20.8 | 20.8 | 21 | 21 | 21.1 | 13.2 | 13.5 |
| Zone #2 | 24.1 | 25 | 25.2 | 25.4 | 24.2 | 24.4 | 25.3 | 15.5 | 21.7 |
| Zone #3 | 24.1 | 25 | 25.2 | 25.1 | 22.6 | 23.8 | 25.6 | 15.7 | 20.1 |
| Zone #4 | 32.9 | 38.8 | 39.2 | 39.2 | 26.6 | 30.4 | 36.3 | 21.9 | 41.2 |
| Zone #5 | 29 | 30.3 | 30.4 | 30 | 23.1 | 25.4 | 28 | 17.7 | 40.8 |
| Zone #6 | 26 | 27.7 | 27.8 | 27.6 | 22 | 23.8 | 26.1 | 15.7 | 23.2 |
| Zone #7 | 30 | 31.4 | 31.5 | 31.2 | 23.6 | 25.9 | 28.9 | 17.8 | 38.7 |
| Zone #8 | 22.8 | 23.2 | 23.3 | 23.4 | 22.4 | 22.8 | 23.3 | 14.5 | 16.9 |
| Torque (%) | 23 | 21.3 | 20.1 | 20.9 | 9.1 | 12.5 | 17.5 | 17 | 62 |
| D1000 B3 (MPa) | 1.47 | 1.52 | 1.56 | 1.48 | 1.63 | 1.79 | 1.80 | 0.99 | 0.74 |
| D1000 B8 (MPa) | 1.75 | 1.56 | 1.62 | 1.67 | 1.70 | 1.79 | 1.83 | 0.27 | 0.41 |
| SME (kW/kg/h) | 0.205 | 0.144 | 0.164 | 0.198 | 0.062 | 0.085 | 0.119 | 0.216 | 0.789 |

Mechanical Property Testing of Handsheets:

    i) Elmendorf Tear Strength Testing: Elmendorf tear strength was determined on cut 6.4 cm by 7.6 cm (2.5 in by 3 in) samples of dried/cured handsheet. A single ply sample was placed in a Thwing-Albert tear tester (Thwing-Albert Instrument Company, West Berlin, NJ) with a 1600 g tear arm. The sample was notched with a 1.9 cm (0.75 inch) cut and the arm was released. The tear strength was recorded in grams (grams - force).

ii) Tensile Strength Testing: The cured glass fiber handsheets were cut into 2.54 cm (1 in) by 12.7 cm (5 in) strips for tensile testing. Dry Tensile Strength was performed on seven strips from each binder sample using a Thwing-Albert Intellect 500 tensile tester (Thwing-Albert Instrument Company, West Berlin, NJ) with a 45 N (200 lb.) load cell set at a 2.54 cm/min (1 in/min) crosshead speed, 20% sensitivity, and a 7.62 cm (3 in) gap. The recorded result is the average of the five strips tested. Hot-Dry Tensile Strength testing was performed on the prepared strips using an Instron 4201 tensile tester (Instron, Norwood, MA) equipped with a 1 kN load cell and an oven chamber encasing the jaws with a temperature range capability of -73°C to 204°C (-100°F to 400°F). The oven chamber of the tensile tester was pre-heated to 150°C (302°F) prior to testing. Once pre-heated, the strips were placed in the jaws and the oven chamber was closed and equilibrated back to 150°C (302°F). The samples were then pulled apart at a crosshead speed of 2.54 cm/min (1 in/min) with a 7.62 cm (3 in) gap. The recorded result is the average of the five strips tested. Hot-Wet tensile strength testing was performed after soaking strips for 10 minutes in 85°C water. After the soaking period, the strips were patted dry with paper towels and immediately pulled apart at a crosshead speed of 2.54 cm/min (1 in/min) with a 7.62 cm (3 in) gap. The recorded result is the average of the five strips tested.

Determination of Loss On Ignition (LOI): A 6.4 cm by 7.6 cm (2.5 inch by 3 inch) piece of dried/cured fiberglass mat was cut. The sample was weighed and then placed in a muffle furnace at 650°C for 2 minutes. The sample was removed and then reweighed. % LOI was calculated using the equation:

$$\% \text{ LOI} = (\text{weight before burning} - \text{weight after burning}) \times 100 / \text{weight before burning}.$$

Table 2: Mechanical Properties of Glass Fiber Mats Made from the Aqueous Binders of Examples 1 to 9

| Example | CE1 | 2 | 3 | 4 | 5 | 6 | 7 | CE8 | CE9 |
|---|---|---|---|---|---|---|---|---|---|
| Processable to make Handsheets | Yes | Yes | Yes | Yes | Yes | Yes | Yes | No | No |
| Room Temp. Tensile (N) | 129.4 | 156.1 | 142.3 | 153.9 | 157.5 | 161.0 | 129.4 | na | na |
| Hot-Dry Tensile (N) | 133.9 | 112.5 | 109.0 | 117.0 | 115.7 | 130.3 | 133.9 | na | na |
| Hot-Wet Tensile (N) | 44.9 | 68.5 | 68.9 | 77.0 | 65.4 | 82.3 | 44.9 | na | na |
| Tear Resistance (gms.) | 985 | 849 | 921 | 857 | 919 | 927 | 824 | na | na |

As shown in Table 2, above, the inventive binders of Example 2 to7 provide improved room temperature tensile and much improved hot-wet tensile strength when compared to the soy flour dispersion of Comparative Examples 1, 8 and 9 extruded in the absence of a polycarboxy emulsion (co)polymer. These results indicate that aqueous soy flour binder compositions can be made in a single continuous process dispersions and that their hot-wet tensile strength can be improved to a surprising extent with a polycarboxy emulsion (co)polymer.

In the case of Comparative Examples 8 and 9, the samples were not processable into continuous hand sheet samples. The average soy flour particle size was too large to be drawn by vacuum through the fiber glass matrix.

Comparative Examples 1A and1 B: Other Methods

Other high shear apparati were tested for ability to reduce the particle size of the soy flour and mix the components of the soy flour binder composition in one process. A Cowles Dissolver equipped with an angled tooth blade, and, separately, a rotostator equipped with a slotted disintegrating head were run in a series of trials each at a different speed varying from 1000 - 3500 rpm, and for a time ranging from 15-45 minutes. Neither apparatus under any of the test conditions was able to successfully reduce the particle size of the soy flour to provide a binder that could be applied to a freshly made handsheet. In each experiment, after the binder was applied to the de-watered handsheet, the binder could not be vacuumed off because the large soy flour particles blocked the interstitial areas between glass fibers preventing flow through the handsheet. The binder pooled up on the surface of the handsheet and could not be vacuumed through from beneath. Therefore, a handsheet could not be made for mechanical property testing.

Examples 10-14: The Impact of Enzymes

Soy flour A was fed to the extruder using the Extrusion Procedure. For all examples 10 to 14, the polycarboxy emulsion copolymer B was added to the upstream addition point at barrel 3; the indicated enzyme was added in barrel 3 (upstream of the grinding phase). Details of the feed compositions are given in Table 3, below. Comparative Example 10 was prepared without enzyme. Details of the operating conditions and feed rates are given in Table 4. Total extrusion times ranged from 1 to 5 minutes with the ratio of soy flour solids to polycarboxy emulsion copolymer solids ranging from 2.9 to 1.

Table 3: Binder Formulations with Enzymes

| Example | Enzyme composition |
|---------|--------------------|
| **10** | none |
| **11** | Enzyme B 0.5% (0.5 parts enzyme liquid per 100 parts dry soy flour)[1] |
| **12** | Enzyme B 1.0% (1.0 parts enzyme liquid per 100 parts dry soy flour) |
| **13** | Enzyme A 1.0% (1.0 parts enzyme liquid per 100 parts dry soy flour)[1] |
| **14** | Enzyme A 1.25% (1.25 parts enzyme liquid per 100 parts dry soy flour) |
| 1. Add enzyme in-line | |

Table 4: Extrusion Conditions for Examples 10 to 14

| Example Number | 10 | 11 | 12 | 13 | 14 |
|----------------|-----|-----|-----|-----|-----|
| **Pump @ B3 rate (ml/min)** | 17.47 | 17.47 | 17.47 | 17.47 | 17.47 |
| **Pump @ B8 rate (ml/min)** | 142.47 | 142.47 | 142.47 | 142.47 | 142.47 |
| **Latex Premix B rate (ml/min)** | 34.30 | 34.30 | 34.30 | 34.30 | 34.30 |
| **Soy Flour feed (kg/h)** | 3.00 | 3.00 | 3.00 | 3.00 | 3.00 |
| **Total rate (kg/h)** | 14.65 | 14.65 | 14.65 | 14.65 | 14.65 |
| **Extruder RPM** | 450 | 450 | 450 | 450 | 450 |
| **Zone #1 (°C)** | 7.9 | 8.1 | 8.2 | 8.1 | 8.2 |
| **Zone #2** | 12.2 | 13.2 | 13.9 | 13.6 | 13.8 |
| **Zone #3** | 12.1 | 13.1 | 13.5 | 13.1 | 13.6 |
| **Zone #4** | 23.7 | 28.4 | 29 | 26.8 | 30.6 |
| **Zone #5** | 14.9 | 16.2 | 17.1 | 15.7 | 16.8 |
| **Zone #6** | 13.2 | 14.6 | 15.5 | 14.4 | 15.7 |
| **Zone #7** | 14.6 | 15.7 | 16.9 | 15.5 | 16.8 |
| **Zone #8** | 10.6 | 11.5 | 11.7 | 11.5 | 11.7 |
| **Torque (%)** | 20 | 19.3 | 21.8 | 19.1 | 18.9 |
| **D1000 B3 (MPa)** | 2.90 | 3.12 | 3.00 | 3.02 | 3.12 |
| **D1000 B8 (MPa)** | 2.83 | 2.26 | 2.97 | 2.85 | 3.01 |
| **SME (kW/kg/h)** | 0.136 | 0.133 | 0.150 | 0.131 | 0.130 |

Table 5 - Properties of Examples 10-14

| Example Number | 10 | 11 | 12 | 13 | 14 |
|----------------|-----|-----|-----|-----|-----|
| **Room Temp. Tensile (N)** | 137.9 | 119.7 | 211.7 | 180.2 | 176.1 |

(continued)

| Example Number | 10 | 11 | 12 | 13 | 14 |
|---|---|---|---|---|---|
| Hot-Dry Tensile (N) | 109.4 | 97.4 | 170.8 | 141.5 | 133.4 |
| Hot-Wet Tensile (N) | 64.5 | 56.9 | 108.1 | 97.0 | 91.2 |
| Tear Resistance (gms.) | 919 | 823 | 1030 | 927 | 960 |

As shown in Table 5, above, the aqueous binders of Examples 12 to 14 provide dramatically improved room temperature, hot-dry and hot-wet tensile strength and tear resistance versus the aqueous binder of Example 10 that is extruded with polycarboxy emulsion copolymer but in the absence of enzymes. Inventive Examples 10 and 11 both provide a binder that can make a useful fiber or non-woven mat or hand sheet. Therefore, the present invention lies in enabling soy flour binder compositions that provide such a useful mat.

**Claims**

1. A continuous method of making ready to use aqueous soy binders comprising
extruding in a twin screw extruder wet non-water soluble soy flour in grind phase mixing and downstream including in extrusion a polycarboxy emulsion copolymer in distributive phase mixing, such that in the binders the amount of soy flour solids ranges from 51 to 95 wt.%, based on the total weight of binder solids, the amount of polycarboxy emulsion copolymer ranges from 5 to 40 wt.%, based on the total weight of binder solids, and, wherein the sieve particle size of the soy flour in the resulting product ranges from 5 to 44 $\mu$m.

2. The method as claimed in claim 1, wherein the twin-screw extruder is a co-rotating twin-screw extruder.

3. The method as claimed in any one of claims 1 or 2, wherein no heat is added to the extruder.

4. The method as claimed in claims 1, wherein grind phase mixing takes place in two or more neutral kneading blocks or kneading block groups.

5. The method as claimed in any one of the claims 1, 2, 3 or 4, wherein the polycarboxy emulsion copolymer comprises a copolymerized ethylenically unsaturated carboxylic acid, carboxylate or anhydride in the amount of from 5 to 40 wt.%, based on the total weight of monomers used to make the copolymer.

6. The method as claimed in any one of claims 1 to 5, further comprising adding water to the extruder downstream of the soy flour in the grind phase and/or downstream of the polycarboxy emulsion copolymer in the distributive phase to reach a total binder solids content of from 20 to 60 wt.% in the distributive mixing phase.

7. The method as claimed in any one of claims 1 to 6, wherein distributive phase mixing further comprises extruding one or more reducing sugar in the total amount of 1 to 40 wt.%, based on the weight of total binder solids.

8. The method as claimed in any one of claims 1 to 7, wherein distributive phase mixing further comprises extruding one or more thermally generated acid in the total amount of from 0.25 to 10 wt.%, based on the total weight of binder solids.

9. The method as claimed in any one of claims 1 to 8, wherein distributive phase mixing further comprises extruding an additive chosen from a protease enzyme in the amount of from 0.1 to 2.5 wt.%, based on the total weight of soy flour solids, an amylase enzyme in the amount of from 0.1 to 2.5 wt.%, based on the total weight of soy flour solids, a combination of the protease and the amylase enzyme, a thermally generated acid and one or more of the enzymes, a reducing sugar and one or more of the enzymes, and a thermally generated acid , a reducing sugar and one or more of the enzymes.

10. The method as claimed in claim 9, wherein the additive is a protease enzyme or an amylase enzyme and the total amount of the enzyme ranges from 0.2 to 5.0 wt.% based on the total weight of soy flour solids.

**EP 2 725 054 B1**

**Patentansprüche**

1. Ein kontinuierliches Verfahren zum Herstellen von verwendungsbereiten wässrigen Sojabindemitteln, beinhaltend das Extrudieren von nassem nicht wasserlöslichem Sojamehl in Mahlphasenmischung in einem Doppelschneckenextruder und stromabwärts in Extrusion ein Polycarboxyemulsionscopolymer in distributiver Phasenmischung umfassend, so dass in den Bindemitteln die Menge an Sojamehlfeststoffen, bezogen auf das Gesamtgewicht an Bindemittelfeststoffen, in dem Bereich von 51 bis 95 Gew.-% liegt, die Menge an Polycarboxyemulsionscopolymer, bezogen auf das Gesamtgewicht an Bindemittelfeststoffen, in dem Bereich von 5 bis 40 Gew.-% liegt, und wobei die Siebpartikelgröße des Sojamehls in dem resultierenden Produkt in dem Bereich von 5 bis 44 $\mu$m liegt.

2. Verfahren gemäß Anspruch 1, wobei der Doppelschneckenextruder ein gleichläufiger Doppelschneckenextruder ist.

3. Verfahren gemäß einem der Ansprüche 1 oder 2, wobei dem Extruder keine Hitze zugeführt wird.

4. Verfahren gemäß den Ansprüchen 1, wobei Mahlphasenmischung in zwei oder mehr neutralen Knetblöcken oder Knetblockgruppen stattfindet.

5. Verfahren gemäß einem der Ansprüche 1, 2, 3 oder 4, wobei das Polycarboxyemulsionscopolymer eine copolymerisierte, ethylenisch ungesättigte Carbonsäure, ein copolymerisiertes, ethylenisch ungesättigtes Carboxylat oder Anhydrid in der Menge von 5 bis 40 Gew.-%, bezogen auf das Gesamtgewicht der Monomere, die verwendet werden, um das Copolymer herzustellen, beinhaltet.

6. Verfahren gemäß einem der Ansprüche 1 bis 5, ferner beinhaltend das Hinzugeben von Wasser zu dem Extruder stromabwärts des Sojamehls in der Mahlphase und/oder stromabwärts des Polycarboxyemulsionscopolymers in der distributiven Phase, um einen Gesamtbindemittelfeststoffgehalt von 20 bis 60 Gew.-% in der distributiven Mischphase zu erreichen.

7. Verfahren gemäß einem der Ansprüche 1 bis 6, wobei die distributive Phasenmischung ferner das Extrudieren von einem oder mehreren reduzierenden Zuckern in der Gesamtmenge von 1 bis 40 Gew.-%, bezogen auf das Gewicht der Gesamtbindemittelfeststoffe, beinhaltet.

8. Verfahren gemäß einem der Ansprüche 1 bis 7, wobei die distributive Phasenmischung ferner das Extrudieren von einer oder mehreren thermal erzeugten Säuren in der Gesamtmenge von 0,25 bis 10 Gew.-%, bezogen auf das Gesamtgewicht an Bindemittelfeststoffen, beinhaltet.

9. Verfahren gemäß einem der Ansprüche 1 bis 8, wobei die distributive Phasenmischung ferner das Extrudieren eines Zusatzstoffs, ausgewählt aus einem Proteaseenzym in der Menge von 0,1 bis 2.5 Gew.-%, bezogen auf das Gesamtgewicht der Sojamehlfeststoffe, einem Amylaseenzym in der Menge von 0,1 bis 2,5 Gew.-%, bezogen auf das Gesamtgewicht der Sojamehlfeststoffe, eine Kombination von dem Protease- und dem Amylaseenzym, einer thermal erzeugten Säure und einem oder mehreren der Enzyme, einem reduzierenden Zucker und einem oder mehreren der Enzyme und einer thermal erzeugten Säure, einem reduzierenden Zucker und einem oder mehreren der Enzyme, beinhaltet.

10. Verfahren gemäß Anspruch 9, wobei der Zusatzstoff ein Proteaseenzym oder ein Amylaseenzym ist und die Gesamtmenge des Enzyms im Bereich von 0,2 bis 5,0 Gew.-%, bezogen auf das Gesamtgewicht der Sojamehlfeststoffe, liegt.

**Revendications**

1. Une méthode continue pour réaliser des liants au soja aqueux prêts à l'emploi comprenant le fait d'extruder dans une extrudeuse bi-vis de la farine de soja humide non soluble dans l'eau lors d'un mélange en phase de broyage et le fait d'inclure en aval dans l'extrusion un copolymère en émulsion polycarboxy lors d'un mélange en phase distributive, de telle manière que dans les liants, la quantité de solides de farine de soja est comprise dans la gamme allant de 51 à 95 % en poids, rapporté au poids total de solides de liant, la quantité de copolymère en émulsion polycarboxy est comprise dans la gamme allant de 5 à 40 % en poids, rapporté au poids total de solides de liant, et où la taille de particule déterminée par tamisage de la farine de soja dans le produit résultant est comprise dans la gamme allant de 5 à 44 $\mu$m.

13

**2.** La méthode telle que revendiquée dans la revendication 1, où l'extrudeuse bi-vis est une extrudeuse bi-vis corotative.

**3.** La méthode telle que revendiquée dans l'une quelconque des revendications 1 ou 2, où il n'est pas ajouté de chaleur à l'extrudeuse.

**4.** La méthode telle que revendiquée dans les revendications 1, où le mélange en phase de broyage a lieu dans deux blocs malaxeurs ou groupes de blocs malaxeurs neutres ou plus.

**5.** La méthode telle que revendiquée dans l'une quelconque des revendications 1, 2, 3 ou 4, où le copolymère en émulsion polycarboxy comprend un acide carboxylique, carboxylate ou anhydride éthyléniquement insaturé copolymérisé dans une quantité allant de 5 à 40 % en poids, rapporté au poids total de monomères utilisés pour réaliser le copolymère.

**6.** La méthode telle que revendiquée dans l'une quelconque des revendications 1 à 5, comprenant en sus le fait d'ajouter de l'eau à l'extrudeuse en aval de la farine de soja lors de la phase de broyage et/ou en aval du copolymère en émulsion polycarboxy lors de la phase distributive afin d'atteindre une teneur en solides de liant totale allant de 20 à 60 % en poids lors de la phase de mélange distributive.

**7.** La méthode telle que revendiquée dans l'une quelconque des revendications 1 à 6, où le mélange en phase distributive comprend en sus le fait d'extruder un sucre réducteur ou plus dans une quantité totale de 1 à 40 % en poids, rapporté au poids de solides de liant totaux.

**8.** La méthode telle que revendiquée dans l'une quelconque des revendications 1 à 7, où le mélange en phase distributive comprend en sus le fait d'extruder un acide généré thermiquement ou plus dans une quantité totale allant de 0,25 à 10 % en poids, rapporté au poids total de solides de liant.

**9.** La méthode telle que revendiquée dans l'une quelconque des revendications 1 à 8, où le mélange en phase distributive comprend en sus le fait d'extruder un additif choisi parmi une enzyme protéase dans une quantité allant de 0,1 à 2,5 % en poids, rapporté au poids total de solides de farine de soja, une enzyme amylase dans une quantité allant de 0,1 à 2,5 % en poids, rapporté au poids total de solides de farine de soja, une combinaison de l'enzyme protéase et de l'enzyme amylase, un acide généré thermiquement et l'une des enzymes ou plus, un sucre réducteur et l'une des enzymes ou plus, et un acide généré thermiquement, un sucre réducteur et l'une des enzymes ou plus.

**10.** La méthode telle que revendiquée dans la revendication 9, où l'additif est une enzyme protéase ou une enzyme amylase et la quantité totale de l'enzyme est comprise dans la gamme allant de 0,2 à 5,0 % en poids rapporté au poids total de solides de farine de soja.

## REFERENCES CITED IN THE DESCRIPTION

**Patent documents cited in the description**

- US 7576147 B, Drzal

**Non-patent literature cited in the description**

- **W. W. YAU ; J. J KIRKLAND ; D. D. BLY.** Modern Size Exclusion Chromatography. Wiley-Interscience, 1979

- **J. P. SIBILIA.** A Guide to Materials Characterization and Chemical Analysis. VCH, 1988, 81-84